# EUROPEAN PATENT APPLICATION

(11) **EP 0 533 508 A2**
(43) Date of publication of application: **24.03.1993**
(21) Application number: 92308581.5
(22) Date of filing: 21.09.1992
(51) Int. Cl.: B60Q 1/14

(54) **Apparatus and system for controlling vehicle's headlights**

(30) Priority: 19.09.1991 IL 99517
(71) Applicant: Ben-Lulu, Dani, Ashkelon 78594 (IL)
(72) Inventor: Ben-Lulu, Dani, Ashkelon 78594 (IL)
(74) Representative: Godwin, Edgar James

(57) **Abstract**

A light detector (10( is fixed relative to a light admittance member (7) whereby the direction of incoming light rays capable of impinging upon the detector (10) is confined to preselected directions with respect to the front part of the vehicle. Also included is a first circuit (26) whereby signals produced by the detector (10) in response to light radiation exceeding a preset threshold impinging on the detector (10) are converted into signals useful for automatically switching a switch between a high beam state and a low beam state. There is also provided a system including a first unit (2′) consisting of the above-described apparatus and a transmitter (28) for transmitting detected signals to a second unit (4′) including a receiver (30) and a converter (14) for converting the received signals into useful signals for automatically switching over the switch from one state to another.

## Description

The present invention relates to a vehicle headlight automatic control apparatus and system and in particular, to the automatic selection of the illumination mode of the headlights of a vehicle, between high beam mode and low beam mode, in accordance with the amount of light impinging on the front end of the vehicle.

Many types of such apparatus are known today. All typical systems for controlling the intensity of a vehicle's headlights include a light detector receiving light impinging on the front of the vehicle, which detector generates a signal corresponding to the intensity of light received. Based on the signal from the photo sensor, the presence or absence of a preceding or an oncoming vehicle is determined. In turn, the desired area to be illuminated by the headlights of the vehicle, can be adjusted. This type of apparatus possesses an advantage in that the light beams from the headlights of the vehicle do not subject the driver of the preceding or oncoming vehicle to glare or dazzle from the vehicle's headlights. On the other hand, the angular range of the incident light, namely, the size of the angle in the photo sensor which includes a lens, must be exactly set. The heretofore proposed solutions are costly and complicated in construction and installation and are oriented only to full automatic mode. These difficulties have to date inhibited widespread use of such important apparatus, for preventing road accidents.

It is therefore a broad object of the present invention to provide a vehicle headlight control apparatus which is of a relatively simple construction, easy to install and maintain and inexpensive.

In accordance with the present invention there is therefore provided an apparatus for automatic control of a vehicle's headlight of the type having high and low beam-states switching means, comprising a light detector affixed to a light admittance member confining the direction of incoming light rays capable of impinging upon said detector, to preselected directions with respect to the front part of said vehicle, and first circuit means for converting signals responsive to light radiation exceeding a preset threshold impinging on said detector, into signals useful for automatically switching over said switching means from one state to another.

The invention further provides an anti-dazzle control system for road vehicles equipped with high and low-beam states headlights aNd headlights switched by means, comprising a first unit and a second unit, said first unit including a light detector having a light admittance aperture confining the direction of incoming light rays capable of impinging upon said detector to preselected directions with respect to the front part of said vehicle, first circuit means for converting signals responsive to light impinging on said detector into radio, ultrasound or infrared signals and a radio, ultrasound or infrared transmitter; said second unit including a radio ultrasound or infra-red receiver, second circuit means for converting signals received by said receivier into signals useful for automatically switching over said switching means from one state to another.

The invention will now be described in connection with certain preferred embodiments with reference to the following illustrative figures so that it may be more fully understood.

With specific reference now to the figures in detail, it is stressed that the particulars shown are by way of example and for purposes of illustrative discussion of the preferred embodiments of the present invention only and are presented in the cause of providing what is believed to be the most useful and readily understood description of the principles and conceptual aspects of the invention. In this regard, no attempt is made to show structural details of the invention in more detail than is necessary for the fundamental understanding of the invention, the description taken with the drawings making apparent to those skilled in the art how the several forms of the invention may be embodied in practice.
In the drawings:
Fig. 1 is a schematic block diagram of a vehicle headlight control apparatus according to the present invention;
Fig. 2 is a schematic block diagram of a further embodiment of a vehicle headlight control apparatus;
Fig. 3 is a schematic representation of a front windshield window of a vehicle indicating possible location for the placement of the detector of the apparatus according to the present invention;
Figs. 4A and 4B are schematic representations illustrating light rays admittance arrangement of the light detector according to the present invention; and
Figs. 5A and 5B are signal diagrams illustrating automatic and semiautomatic modes for controlling vehicles' headlights.

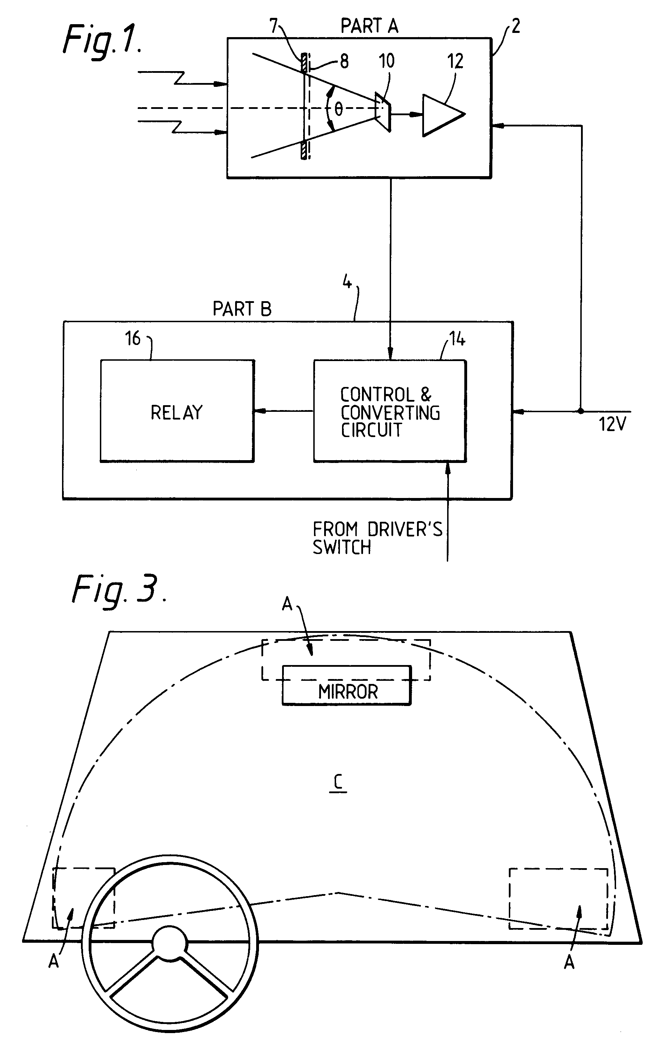

In Fig. 1 there is illustrated a basic embodiment of the apparatus, according to the present invention, consisting of two main parts: part A, which includes the light receiving, detection, amplifying, and signal processing unit 2, and part B, which includes the signal receipt, processing and switching control and communication unit 4.

The light receiving, detection and processing unit 2 comprises light radiation admittance, tubular member 6 having an aperture 7, advantageously an optical filter 8 located behind the aperture 7, a light detector 10 and a signal amplifier, processor and transmitter 12.

The control signal receipt, processing and switching control unit 4 comprises in addition to the signal receipt and processing circuit 14, a relay 16, for activating the vehicle's headlight high and low beam switching means, which is normally manually operated by the driver.

In accordance with this embodiment, units A and B are interconnected by wires leading from the location in the vehicle to which unit 2 is affixed to the location of unit 4, which is normally chosen to be behind the vehicle's instrument panel.

The two units 2 and 4 may be powered from a 12V accumulator which can be constituted by the vehicle's battery, a solar powered source and the like.

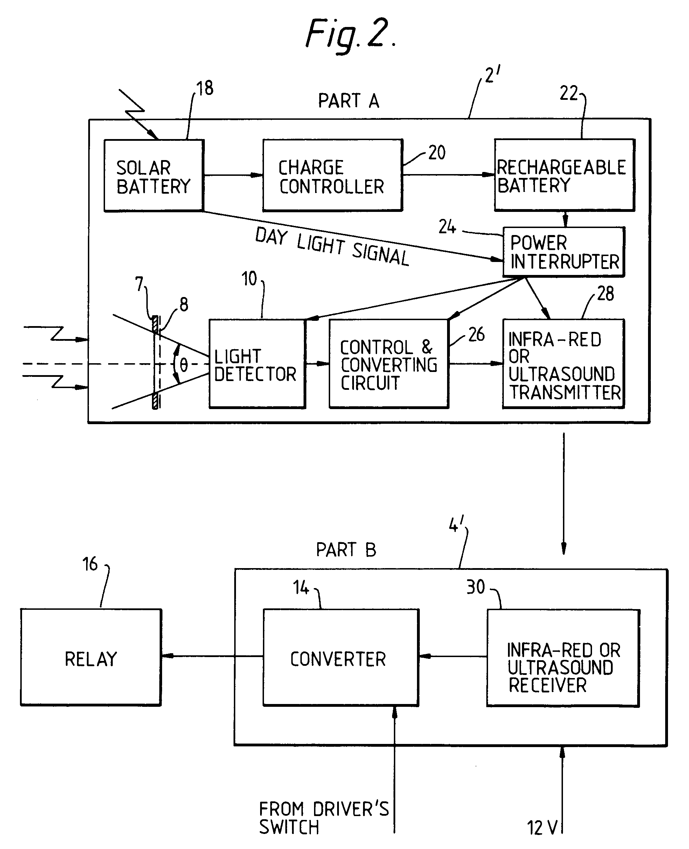

Referring to Fig. 2, there is illustrated a more detailed, further embodiment of the two part wireless apparatus. Seen is a unit 2′ comprising an optional, solar chargeable battery 18, feeding, via a charge controller 20, a rechargeable battery 22 connected to a power interrputer 24.

The light detector 10, receiving light at its input via aperture 7 and filter 8, is connected, at its output to a control and converting circuit 26. The latter operates a radio, infra-red or ultrasound transmitter 28 for transmitting signals to a compatible radio, infra-red or ultrasound receiver 30 constituting part of the unit 4′. The received ultrasound signal received in unit 4′ is then transferred to the converting circuit 14 operating the relay 16.

In order to assure effective and reliable operation of the apparatus, part A (units 2 and 2′) and in particular, the radiation admittance aperture 7, should be located on the vehicle at such a location as to remain clean and unpolluted. It is therefore, in accordance with the present invention proposed to locate unit 2 or 2′ behind the vehicle's front window (windshield) at the zone C delimited to the hatched line seen in Fig, 3, normally wiped clean by the windshield wiper or wipers. Preferred examples of such locations marked A (designating the part A) are illustrated in the Figure.

The effectiveness of the system in the prevention of dazzling or blinding of a vehicle's driver by light coming from an approaching vehicle, is improved by providing a detector 10 having a relatively large surface area made of a highly sensitive photo-detecting material, capable of producing a detectable signal without being located at a focal point of an optical arrangement such as, a lens set-up.

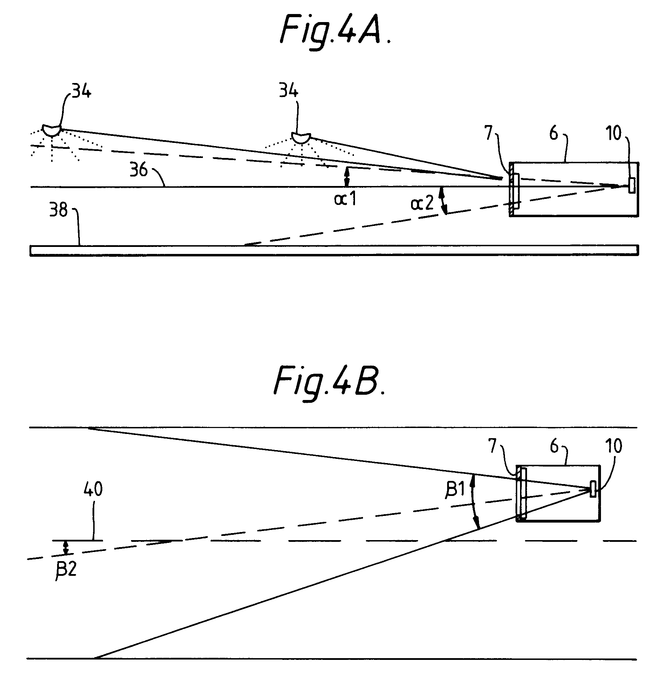

A further improvement of the system will now be described with reference to Figs. 4A and 4B. As seen, the aperture 7 is formed in a closed tubular member 6, and is provided with an opening having a smaller dimension in the vertical direction than in the horizontal direction, so as to limit light rays emanating from street lights 30, or similar sources of light such as traffic lights, street and store signs and the like, to an angle α₁, wherein α₁ is an angle included between a plane 16 extending substantially parallel to the plane of the road 38 and passing through the aperture and the centre of the light detector 10, and the upper edge of the aperture. Similarly, light rays reflected from the surface of the road 38 are limited to an angle α₂, which angle is the angle included between the plane 36 and a line passing through the centre of the detector 10 and the lower edge of the aperture. the Angles α₁, and α₂ need not be identical.

With respect to the size and configuration of the aperture 7 in the horizontal direction, here too, the aperture is designed to limit light rays emanating from the (right) side of the vehicle, for right side lane driving (or from the left side for left side driving) since, obviously, approaching vehicles do not drive in the same lane. Hence, the aperture's total light receiving angle β₁, is deflected from a line passing through the centre of the tubular member 6 by an angle β₂ toward the opposite lane with respect to the center line 40 dividing the road between the right and left lane or lanes.

The main task of the filter 8 is to further improve the operation of the apparatus, by limiting its sensitivity and operation, to responding to radiation typical to vehicle's headlights and taillights only, and not the light radiation eminating from other sources. In addition to the filter's major task described above, the filter may also be utilized for controlling the amount of light entering the aperture 7 from different angles, thereby achieving, by optical means, the light angle-detection control, previously achieved by the geometrical structure of the aperture, or in addition thereto.

The operation of the apparatus will now be described with reference to Fig. 2. If the apparatus is equipped with the optional, solar radiation battery charger, power from the solar battery 18 charges the rechargeable battery 22. When, solar radiation is not available, namely, during evening and night hours or when, e.g., a vehicle enters a tunnel or a parking lot, power is automatically obtained from the rechargeable battery 22. Once the detector 10 is impinged upon by radiation exceeding a predetermined threshold, a signal is produced and applied to the control and/or converting circuit 26. In accordance with the embodiment of Fig. 2, the signal is processed for advantageously converting same into pulses suitable for transmission, as radio, infra-red or ultrasound signals. The signals are, thus, transmitted, as opposed to applied through wires, to part B of the apparatus, which part B is affixed to the vehicle at any convenient location between the headlights and the manual control thereof, normally located behind the driver's dashboard. While the transmission of the control signals require further electronic circuits for converting the detected light radiation into signals suitable for wireless transmission, as described hereinbefore, the avoidance of having to wire each vehicle with leads interconnecting the two parts A and B of the apparatus, especially in view of the location of part A on the front window of the vehicle, results in an overall saving of labour and in a much improved operation and appearance.

The signals, whether ultrasound or infra-red, received by the receiver 30 are then converted again by circuit 14 into regular control signals and are applied to the relay 16, functionally overriding the vehicle's headlights' switching arrrangement.

Once the light radiation detected by the light detector 10 returns to a level below the intensity level preset for the activation of the control and converting circuit 26, no further signal is transmitted by the light detection unit 2′ and, in turn the relay 16 is deactivated.

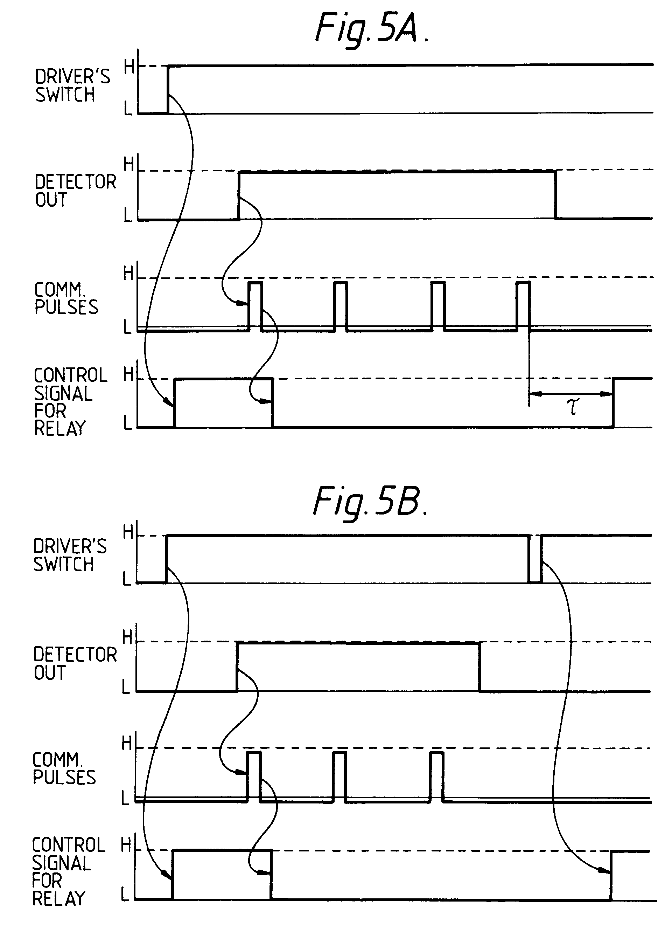

Referring now specifically to Figs. 5A and 5B, there are illustrated two modes of controlling the vehicle's headlights: on automatic mode - Fig. 5A, and a semiautomatic mode - Fig. 5B. In the automatic mode, when the driver turns on the headlight switch, e.g., by means of the light control handle inside the vehicle, the relay 16 (Figs. 1 and 2) is actuated. when light from an approaching vehicle impinges upon the detector 10, an output signal is emitted and activates the transmitter 12, transmitting pulses to be received by the receiver, for eventual deactivation of the relay 16, thereby changing the vehicle's "high beam" to "low beam". When the approaching vehicle passes, the detector's output changes back to its low state, and the transmitter ceases to transmit. After a time period τ commencing from the termination of the last pulse, the relay 16 will reactivate the vehicle's high beam.

In the semiautomatic mode, Fig. 5B, when an approaching vehicle passes and the detector does not detect further light radiation (from a second approaching vehicle), the driver manipulates the light control handle to switch on the "high beam" again.

Hence, whenever there is detected a radiation of light exceeding a predetermined intensity and directed towards the front of the vehicle at an angle as present by the radiation admittance aperture, the intensity of the light radiated by the vehicle's headlights is reduced and/or the angle of radiation of the beams are lowered, so as not to dazzle or blind the driver of an approaching vehicle.

It will be evident to those skilled in the art that the invention is not limited to the details of the foregoing illustrative embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. Apparatus for automatic control of a vehicle headlight of the type having switching means with high beam and low beam states, the apparatus comprising a light detector (10), a light admittance member (7) whereby the direction of incoming light rays capable of impinging upon the detector (10) from in front of the vehicle is confined to preselected directions, and circuit means (12;26) whereby signals produced by the detector (10) in response to light radiation exceeding a preset threshold impinging on the detector (10) are converted into signals useful for automatically changing the switching means from one state to another.

2. Apparatus as claimed in claim 1, wherein the light admittance member comprises an aperture (7) configured to admit light rays originating from directly or angularly approaching headlights and to obstruct light rays emanating from other light sources.

3. Apparatus as claimed in claim 1 or 2, including an optical filter (8) through which incoming light rays pass to the detector (10), the filter (8) preferably being disposed between the aperture (7) and the detector (10).

4. Apparatus as claimed in any preceding claim, including circuit means (26,28) for converting the signals produced by the detector (10) into radio, ultrasound, or infra-red signals.

5. Apparatus as claimed in claim 4, including a signal transmitter (28) for transmitting the radio, ultrasound, or infra-red signals to a compatible receiver (30) to be further converted into signals useful for automatically changing the switching means from one state to another.

6. Apapratus as claimed in any preceding claim, wherein the light detector (10) and the light admittance member (7) are provided with means for affixing same onto the inside surface of a vehicle's front window.

7. An anti-dazzle control system for road vehicles equipped with high and low beam-states headlights and headlight switching means, the system comprising:
a first unit (2′) including a light detector (10), a light admittance aperture (7) whereby the direction of incoming light rays capable of impinging upon the detector (10) from in front of the vehicle is confined to preselected directions, first circuit means (26) whereby signals produced by the detector (10) in response to light impinging on the detector (10) are converted into radio, ultrasound, or infra-red signals, and a radio, ultrasound, or infra-red transmitter (28) for these signals; and
a second unit (4′) including a radio, ultrasound, or infra-red receiver (30) for receiving signals from the transmitter (28), and second circuit means (14) whereby signals received by the receiver (30) are converted into signals useful for automatically changing the switching means from one state to another.

8. A system as claimed in claim 7, wherein the first unit (2′) is provided with means for affixing same onto the inside surface of the front window of the vehicle and the second unit (4′) is adapted to be separately affixed to the vehicle at a location adjacent to the beam-state switching means.

9. A system as claimed in claim 7 or 8, including an optical filter (8) through which incoming light rays pass to the detector (10), the filter (8) preferably being disposed between the aperture (7) and the detector (10).

10. A system as claimed in any of claims 7 to 9, wherein the first unit includes an independent electrical power source, preferably rechargeable by a solar chargeable battery.
